Europäisches Patentamt

European Patent Office

Office européen des brevets

(19)

(11) EP 1 471 692 A2

(12) **EUROPEAN PATENT APPLICATION**

(43) Date of publication:
**27.10.2004 Bulletin 2004/44**

(51) Int Cl.⁷: **H04L 12/28**

(21) Application number: **04252031.2**

(22) Date of filing: **05.04.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **16.04.2003 KR 2003024177**

(71) Applicant: **Samsung Electronics Co., Ltd.**
**Suwon-si, Gyeonggi-do (KR)**

(72) Inventors:
• **Jin, Yeon-ho**
**Ilsan-gu Goyang-si Gyeonggi-do (KR)**
• **Yoon, Hyun-sik**
**Gangdong-gu Seoul (KR)**
• **Yook, Hyun-gyoo**
**Seocho-gu Seoul (KR)**

(74) Representative: **Davies, Robert Ean et al**
**Appleyard Lees,**
**15 Clare Road**
**Halifax HX1 2HY (GB)**

(54) **Method and system for constructing and utilizing home-state information in a home network**

(57)     A method and system for constructing and utilizing home-state information, which systematically defines home-state information, that is, complicated information within a home generated with the development of a home network, and enables a user to utilize the home-state information. Disclosed is a method comprising the steps of constructing a home-state set (310) using home-state information sources, constructing home-state objects (320) which are specific instances of the home- state set, and constructing home-state properties (330) expressing properties of the home-state objects. Also disclosed is a method of utilizing the home-state information, comprising the steps of collecting information through an information collecting module (611) in a home agent (411), processing the collected information to generate home-state information, analyzing the generated home-state information, and storing the generated home-state information.

**FIG. 6**

Printed by Jouve, 75001 PARIS (FR)

**Description**

The present invention relates generally to a method and system for constructing and utilizing home-state information, which systematically defines home-state information, that is, complicated information within a home generated with the development of a home network, and enables a user to utilize the home-state information.

In the prior art, the state of a home network is expressed using only separate pieces of state information of respective devices connected to a network, such as device information and application information. However, since a method of expressing home-state information is not additionally defined, a process of collecting and analyzing separate pieces of state information of the devices is desirable.

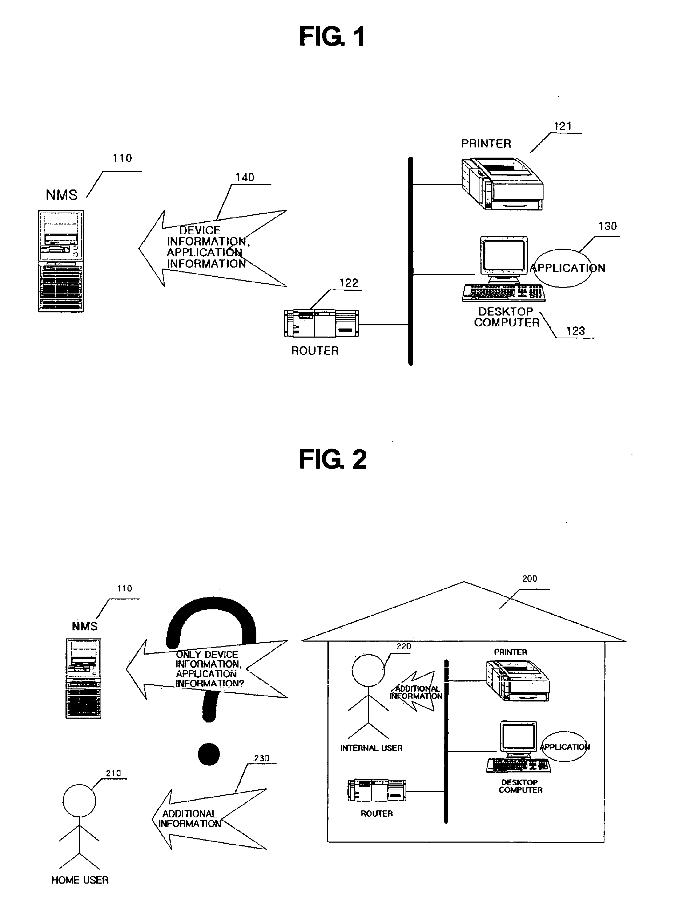

Referring to FIG. 1, a conventional scheme includes devices 121, 122 and 123 connected to a network which is information sources of state information, and an application system, such as a Network Management System (NMS) 110, for receiving state information 140 of respective devices 121, 122 and 123 or an application 130.

The utilization of state information in the conventional scheme is described below. The devices 121, 122 and 123 connected to the network, that is, information sources of state information, provide their own state information to the NMS 110, or an application or system desiring to know state information of the devices 121, 122 and 123 through the network. This type of utilization is typical, and it is generally used, for example, in an office network. In this case, since each of the devices 121, 122 and 123 or the application 130 independently has state information thereof, they each transmit the state information in accordance with a protocol when the NMS 110 or another application requires state information.

However, the conventional scheme is problematic in that it is difficult to express all home-states using only information independent of a network node, such as device and application information 140, which are separate pieces of information of respective devices connected to the network, when a model using conventional state information is applied to a home network.

Referring to FIG. 2, in the conventional scheme, there are many cases where the home network is entirely operated in a home in the state where many intelligent home networking devices and various home services are associated with each other. Therefore, node-independent state information has a limitation in expressing a home. Further, home-state information is required not only in the external NMS 110 or an application, but also in authenticated home users 210 and 220, that is, users actually present inside or outside the home. For example, it is difficult in the conventional model, providing node-independent state information, to express such home-state information, such as information about whether a current home-state is a movie watching mode or a going-out and monitoring mode or whether a current home-state is a state in which only a young child is alone in the home.

Embodiments of the present invention aim to provide a method and system for constructing and utilizing home-state information by using a home-state information architecture.

Embodiments of the present invention aim to define an architecture for systematically expressing home-state information, which is complicated home information generated with the development of a home network.

Embodiments of the present invention aim to provide an interface and software module for using home-state information.

Embodiments of the present invention aim to provide home-state information for a service provider or a user requiring the home-state information.

According to an aspect of the present invention there is provided a method of constructing home-state information in a home network, comprising the steps of: a) constructing a home-state set using home-state information sources; b) constructing home-state objects which are specific instances of the home-state set; and c) constructing home-state properties expressing properties of the home-state objects.

Preferably, the home-state set basically includes common profiles of the information sources.

Also preferably, the step of constructing a home-state set using home-state information sources comprises the step of constructing unique profiles of the respective information sources.

Also preferably, the step of constructing unique profiles of the respective information sources comprises the steps of constructing home device profiles and constructing external home service profiles.

Also preferably, the home-state information constructing method further comprises the step of setting rules for information source objects which form profiles of the information sources and a combination thereof, the rules being applied to a specific home-state object.

Also preferably, the rules of the home-state information constructing method are personally defined by a home user. Further preferably, the rules of the home-state information constructing method are provided from an external home service provider.

Further preferably, the home-state information constructing method further comprises the step of combining a user interface with the home-state information to show the home-state set, the home-state objects and the home-state properties to a user.

Further preferably, the home-state information constructing method further comprises the step of combining an Application Programming Interface (API) with the home-state information to enable the constructed home-state information to be accessed from an external application.

According to another aspect of the present invention there is provided a method of utilizing the home-state information comprising the steps of collecting information through an information collecting module in a home agent, processing the collected information to generate home-state information, analyzing the generated home-state information, and storing the generated home-state information.

Preferably, the home-state information utilizing method further comprises the step of announcing an event outside of a home by analyzing the home-state information.

According to another aspect of the present invention there is provided a home agent device comprising: an information collecting module operable to collect information from various information sources in the network; a home-state generating module operable to process the collected information to generate the home-state information; a home-state analyzing module operable to analyze the generated home-state information depending on home-state properties; and a home-state storing module (609) operable to store the information generated by the home-state generating module and information analyzed by the home-state analysing module.

Preferably, the home agent device comprises an information collecting module for collecting information from various information sources in the network, a home-state generating module for processing the collected information to generate the home-state information, a home-state analyzing module for analyzing the generated home-state information depending on home-state properties, and a home-state storing module for storing the information generated by the home-state generating module and information analyzed by the home-state analyzing module.

Also preferably, the home agent device further comprises an event generating module for announcing an event outside of a home depending on results analyzed by the home-state analyzing module.

Also preferably, the information collecting module comprises a device information collecting module for collecting information of home devices, a user information collecting module for collecting information of home users, an external home service information collecting module for collecting information of an operation between the home devices and an external home service or an operation between the home users and another external home service, a home application information collecting module for collecting information of home applications or contents included in a home server, and a home agent information collecting module for collecting information of the home agent device itself.

According to another aspect of the present invention there is provided a system for utilizing home-state information, comprising: an information collecting module operable to collect information from various information sources in a network; a home-state generating module operable to process the collected information to generate home-state information; a home-state analyzing module operable to analyze the generated home-state information depending on home-state properties; a home-state storing module operable to store the information generated by the home-state generating module and information analyzed by the home-state analyzing module; one or more applications operable to control a predetermined home device using the generated information or the analyzed information; and an Application Programming Interface (API) operable to transmit the information generated by the home-state generating module and the information analyzed by the home-state analyzing module to the applications.

Preferably, the applications are constructed so that transmission/reception of home-state information there between is performed using Meta data for the information generated by the home-state generating module and the information analyzed by the home-state analyzing module.

For a better understanding of the invention, and to show how embodiments of the same may be carried into effect, reference will now be made, by way of example, to the accompanying diagrammatic drawings in which:

FIG- 1 is a block diagram of a prior art scheme of utilizing home-state information;

FIG. 2 is a block diagram showing the problems of the prior art scheme;

FIG. 3A is a view showing the architecture of home-state information according to an embodiment of the invention;

FIG. 3B is a view showing examples of home device profiles according to an embodiment of the invention;

FIG. 4 is a view showing a method of combining information sources composing a home-state set according to an embodiment of the invention;

FIG. 5 is a block diagram of a system for exchanging home-state information using Meta data according to an embodiment of the invention;

FIG. 6 is a block diagram of a configuration module of a home agent for home-state information according to an embodiment of the invention;

FIG. 7 is a flowchart of an operation of constructing home-state information according to an embodiment of the invention;

FIG. 8 is a block diagram showing the operations of applications using a home agent and a home-state information architecture according to an embodiment of the information;

FIG. 9 is a block diagram showing information sources required to explain an example in which a movie watching mode and a crime prevention mode are operated according to an embodiment of the invention;

FIG. 10 is a table showing a relationship between information sources and a home-state object in the movie watching mode according to an embodiment of the invention;

FIG. 11 is a table showing a relationship between information sources and a home-state object in the crime prevention mode according to an embodiment of the invention; and

FIG. 12 is a view showing a method of expressing Meta data in extensible Markup Language (XML) format according to an embodiment of the invention.

Hereinafter, embodiments of the present invention will be described in detail with reference to the attached drawings.

With the popularization of home networks, a great number of intelligent home devices are connected to a network, and various home services have been provided to home users to correspond to the intelligent home devices. Consequently, a home-unit system is implemented and has various states. Such states are defined as home-states in the present invention.

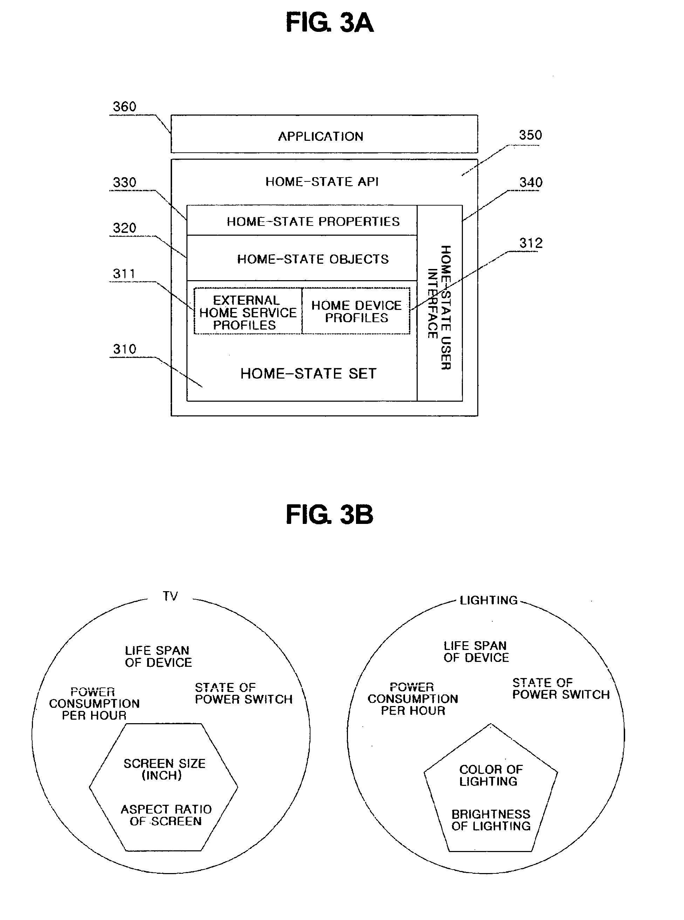

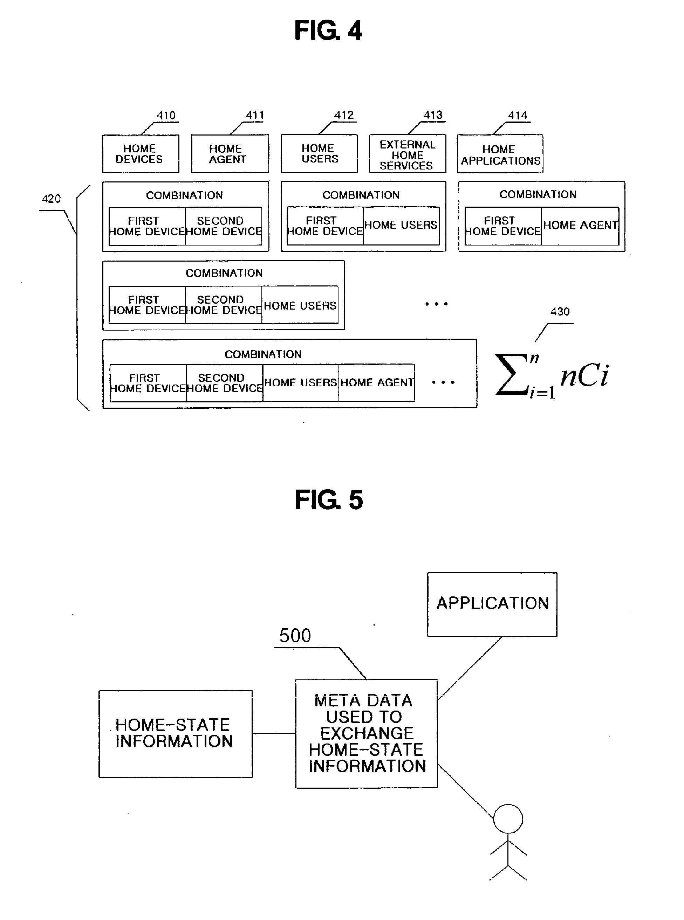

In the home-state information architecture of FIG. 3A, a home-state set 310 becomes a basis of most widely classifying home-states. That is, the home-state set 310 can be defined as a set composed of information sources capable of expressing home-states and the combinations of the information sources. As shown in FIG. 4, the information sources represent home devices 410 connected to a network, a home agent 411 which is software for generating home-states, home users 412 and external home services 413 connected to the home, and home applications 414.

In these information sources, common profiles related to the home can be extracted from the home agent 411 and home users 412. However, common profiles cannot be extracted from the home devices 410 and external home services 413, because the home devices 410 and the external home services 413 are of various types, and so they cannot be normalized to have common information. Therefore, in order to solve the problem, the present invention also includes characteristic profiles 311 and 312 of the home devices and external home services from which common information cannot be extracted. In the case of the home devices 410, unique profiles of the home devices 410 capable of specifying characteristic parts, except for common parts, are referred to as home device profiles 312. In the case of the external home services 413, unique profiles of the external home services 413 capable of specifying characteristic parts, except for common parts, are referred to as external home service profiles 311. In any case, each information source has a single profile composed by combining common basic profiles and unique characteristic profiles, or composed of only common basic profiles. Such a profile is comprised of objects, which can be defined as information source objects.

With reference to FIG. 3B, some home devices are described as examples. Respective home devices 410 or the home-state set 310 have common basic profiles of the home devices without referring to the home device profiles 312. Objects of a device, such as the life span of the device, power consumption per hour and the state (on/off state) of a power switch, belong to basic profiles applied to the device regardless of whether the device is a television (TV), lighting or camera. The home device profiles 312 represent profiles capable of specifying characteristic parts except for the common parts. For example, device objects, such as a screen size (inch) indicating the size of a TV, an aspect ratio indicating the ratio of width to height of a screen, belong to a unique home device profile of only a TV device. Further, the brightness percentage (%) and color of lighting and the like belong to a unique home device profile of only a lighting device.

Consequently, a TV has its own single profile, and a set of respective objects of the device of a TV, such as {the life span of the device, power consumption per hour, the state of a power switch, a screen size, an aspect ratio of a screen, etc.}, is a complete profile of a TV. Similarly, in the case of lighting, a set of respective objects of the device of lighting, such as {the life span of the device, power consumption per hour, the state of a power switch, the brightness % and color thereof, etc.}, is a complete profile of the lighting.

Similar to the home devices, external home services have common basic profiles formed as a set of common objects of all external home services, and unique profiles formed as a set of objects capable of specifying characteristic parts of the respective external home services. These unique profiles are defined as external home service profiles 311, as shown in FIG. 3A. A single external home service has a single profile formed as a complete set of objects belonging to the basic profiles and objects belonging to the external home service profiles.

The home-state objects 320 represent instances (instantiation) of actual home-states in the home-state set. The instantiation means that abstract concepts, class objects, computer processes and the like are actually implemented, that is, an object is embodied by defining a specific modification for the object and titling the object.

The home-state objects 320 are variously formed according to the information sources or the combinations of information sources in the above-described home-state set. For example, the home-state objects represent objects in which the number of home users, the number of home devices currently connected to a network, environment modes of a home system (for example, a going-out mode, a movie watching mode, etc.) and so forth are instantiated in the home-state set. As shown in FIG. 4, these objects can be implemented using only basic information sources (the number of home users and the number of home devices currently connected to the network). However, these objects may be instantiated using the combinations 420 of the information sources. For example, the going-out mode or movie watching mode must be realized through the combination of at least home devices which are basic information sources and home user information.

Home-state properties 330 represent properties of home-state information, that is, include all necessary properties related to which types and values the home-state objects 320 have, what the directionality of data is (read-only or readable and writable), and which graphics are used to display the home-state objects 320 according to user interface IDs.

A home-state user interface 340 represents an interface capable of normalizing the home-state set 310, the profiles, the home-state objects 320 and the home-state properties 330, that is, the home-state information, and showing the normalized results to the outside of the home in graphic format according to respective classes.

A home-state Application Programming Interface (API) 350 represents an interface enabling the home-state information to be accessed from outside of the home. The home-state API 350 for enabling an external application 360 or a home user to use this home-state information is combined with the home-state information, thus defining the home-state information architecture.

Rules for determining which home-state set must be applied to a specific home-state object (movie watching mode or going-out mode), and which profile must be used for each information source, are not included in the home-state information architecture itself. However, the rules may be set through various methods in such a way that the user personally defines the rules or receives the rules from external home services.

FIG. 4 is a view showing a method of combining the information sources composing the home-state set.

As described above, the home-state set 310 can be constructed to comprise the respective information sources, such as the home devices 410, the home agent 411, the home users 412, the external home services 413 and the home applications 414, or comprise the combinations 420 thereof.

If the number of basic information sources is n, the home-state set 310 can be a set of home-state information sources defined by

$$\sum_{i=1}^{n} nCi \quad 430.$$

For example, if basic information sources are first and second home devices, the home agent, first and second home users, first and second external home services, and first and second home applications, respectively, n is "9". Therefore, the home-state set can be expressed by a set of

$$\sum_{i=1}^{9} 9Ci = 2^{9} - 1$$

information sources or the combinations thereof.

FIG. 5 is a block diagram of a system for exchanging home-state information using Meta data.

When the home-state information is used, there is an exchange of the home-state information between applications or between an application and a user through a network. In order to facilitate such an information exchange, a home-state information architecture must be recognized therebetween. This recognition can be carried out through a method using Meta data. Recently, with the development of Information Technology (IT) fields, Web-based applications or Web services have been generally used in information exchange. Therefore, it is preferable to use extensible Markup Language (XML) to express Meta data for home-state information as a suitable example.

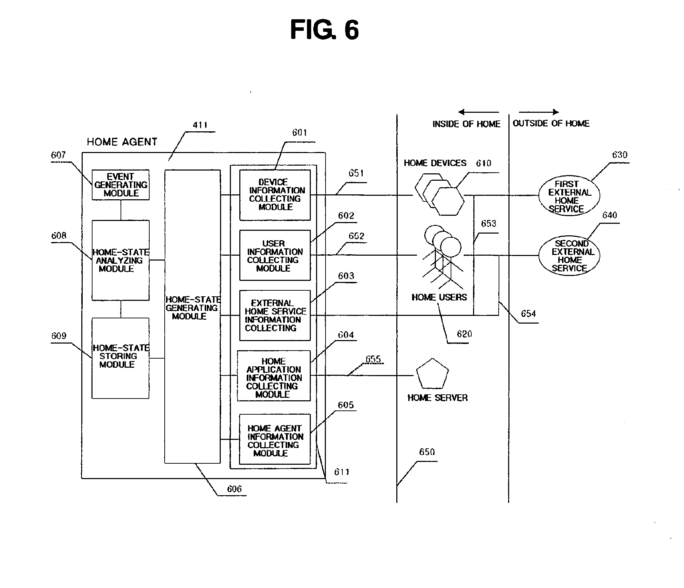

A configuration module of the home agent for collecting and analyzing home-state information can be constructed as shown in FIG. 6.

The home agent 411 represents a software or hardware module mounted on a home gateway or another specific device to handle various information relating to home networking and environment information of mounted devices so as to form home-states.

An information collecting module 611 comprises a device information collecting module 601, a user information collecting module 602, an external home service information collecting module 603, a home application information collecting module 604 and a home agent information collecting module 605. The device information collecting module 601 collects information of home devices 610 connected to the network in the home. The user information collecting module 602 collects basic information or preference information of users 620 having the rights of home devices 610. The external home service information collecting module 603 collects home service information through the connection between the home devices 610 and an external home service 630 and the connection between the home users 620 and an external home service 640. The home application information collecting module 604 collects home application information and content information from an application server or a server having the same function as the application server in the home. The home agent information collecting module 605 is a module for collecting information of the home agent 411 itself mounted on a current device.

Consequently, the home agent 411 comprises the information collecting module 611, a home-state generating module 606 for receiving the information of the information collecting module 611 to generate home-state information, a home-state analyzing module 608 for analyzing the generated home-state information, a home-state storing module 609 for storing information formed by the home-state analyzing module 608 and the home-state generating module 606, and an event generating module 607 for announcing the home-state information outside of the home through the home-state analyzing module 608.

Respective interfaces for a connecting unit 651 for connecting the home agent 411 and the home devices 610, a connecting unit 652 for connecting the home agent 411 and the home users 620, a connecting unit 653 for connecting the home agent 411 and an entire construction, including the home devices 610 and the external home service 630, a connecting unit 654 for connecting the home agent 411 and an entire construction, including the home users 620 and the external home service 640, and a connecting unit 655 for connecting the home agent 411 and home applications or contents, and an integrated interface 650 of the respective interfaces, are provided outside the home agent 411.

The home agent 411 is mounted on a device, such as a home gateway, to collect information from basic information sources 410, 411, 412, 413 and 414 in the home using the information collecting modules 601, 602, 603, 604 and 605. Interfaces for collecting information can be separately provided, like the respective interfaces 651 to 655, or can be implemented by an integrated interface, like the interface 650, according to the characteristics of information sources. With private characteristics of the home taken into consideration, interface authentication can be additionally used. Several methods, such as a polling method through the home agent or a method using an event of information sources, can be used as the information collecting method. Several pieces of information collected in this way are generated as home-state information in accordance with the above-described home-state information architecture by the home-state generating module 606. The generated home-state information can be input to two modules and stored therein. One is a storage of the home-state storing module 609, and the other is the home-state analyzing module 608. In this case, it does not matter that the home-state storing module 609 is provided outside the home agent 411 using a database, if necessary. The home-state analyzing module 608 analyzes the input home-state information according to rules defined by the home agent 411 or externally defined rules in which a home environment is reflected. The analyzed results are applied to the event generating module 607, if necessary, to announce a corresponding event outside of the home.

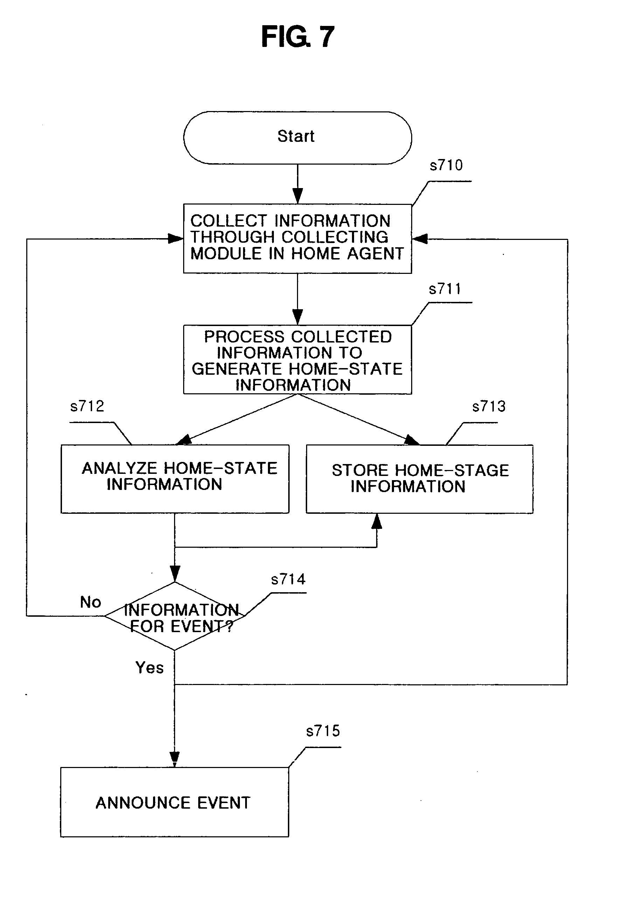

An operation of the home agent of FIG. 6 is described below with reference to FIG. 7. As described above, an operation flow is determined depending on the functions of respective modules. First, the information collecting module within the home agent collects information from the all information sources in the home at step s710. Home-state information is generated using the collected information at step s711. The generated home-state information is transmitted to both the home-state analyzing module and the home-state storing module at steps s712 and s713, respectively. The home-state analyzing module analyzes the home-state information and transmits feedback information of the home-state information to the home-state storing module at step s713. Thereafter, the operation returns to the initial routine for collecting information. After home-state information is analyzed, event information is announced, if necessary, at step s714.

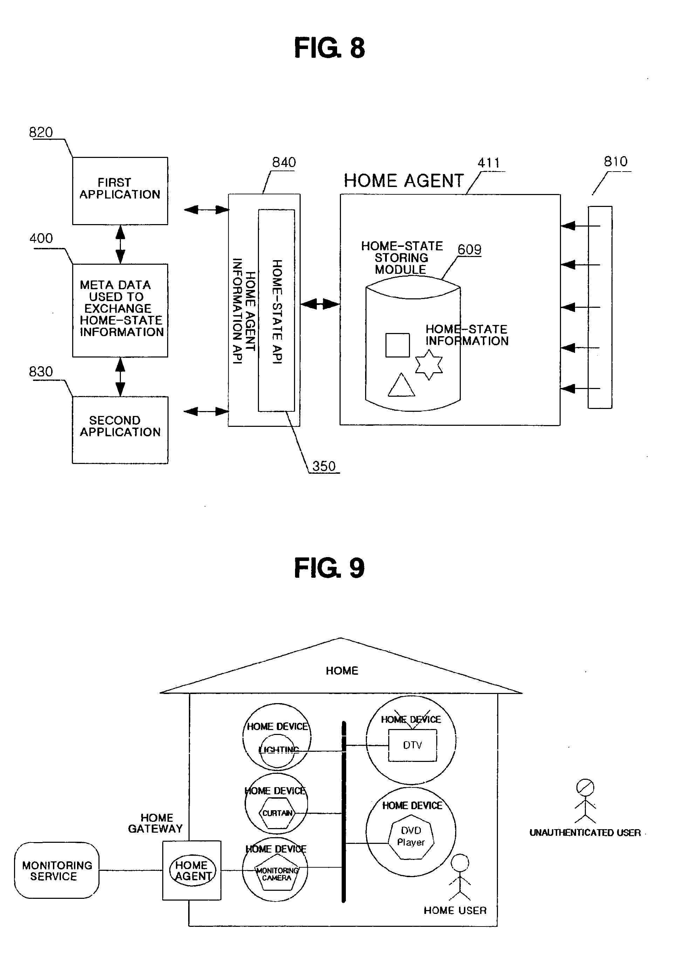

FIG. 8 is a block diagram showing the operations of applications using the home agent and home-state information architecture. This operation is described with reference to FIGS. 8, 3a and 6.
The home agent 411 collects information through a collecting interface 810 of information sources, and ultimately stores the collected information in the home-state storing module 609. Further, applications 820 and 830 access the storing module 609 using a home agent information API 840 including the home-state API 350 so as to use the home-state information stored in the home-state storing module 609. If necessary, the applications 820 and 830 utilize Meta data 400 to exchange the home-state information therebetween.

An operation of an embodiment of the present invention having the above construction is described in detail with reference to a specific example.

FIG. 9 is a block diagram showing information sources required to explain an example in which a movie watching mode and a crime prevention mode are operated. FIG. 9 shows an example in which information sources are physically connected to the outside of the home through a device, such as a home gateway, at the time of an external connection, and especially shows how the movie watching mode and the crime prevention mode are constructed and used through the home-state information in a home network environment.

First, information sources or the combinations thereof, components of a home-state set, are described depending on the definition of the home-state information.

```
--------------------------------------------------------------

Home-state set
{home    agent,    DTV,    DVD    player,    lighting,    curtain,
monitoring  camera,  home  user,  monitoring  service,  {DTV,
DVD   player},   {DTV,   lighting},   {DTV,   curtain},   {DTV,
monitoring  camera},  …,

…,
{home    agent,    DTV,    DVD    player,    lighting,    curtain,
monitoring  camera,  home  user,  monitoring  service}}

--------------------------------------------------------------
```

In this case, the digital TV (DTV), the DVD player, the lighting, the curtain and the monitoring camera are home devices to which unique home device profiles 312 thereof are applied to the common basic profiles thereof in consideration of the respective characteristics thereof. However, unique profiles are not applied to the home agent 411 and the home user 412. In this case, the common basic profiles of the home devices may be home-state information, which can be formed using common information the home devices have, for example, the number of devices in operation, the number of home devices, the average amount of electricity used, and the amount of electricity used in a specific time slot. That is, in order to form the average amount of electricity used as the home-state information, all home devices must provide information on the use of electricity thereof. Since the characteristics of users (for example, names, authentication IDs, whether the users stay at home and the like) can be consistently expressed in some degree, there is no need to apply unique profiles according to home users. Since the remaining home devices differ from each other in their functional characteristics, unique profiles are applied thereto besides basic common profiles. For example, tuner information of a DTV, brightness % of the lighting, and the like, are information characterized according to the functions of the devices.

In order to compose a home-state set, basic home device profiles (circles indicated in FIG. 9) included in the home devices, and unique device profiles (polygons indicated in solid lines and connected to the network in FIG. 9) corresponding to respective functions must exist, and the remaining profiles (external home service profiles, etc.) may be added.

Home-state objects of the movie watching mode and the crime prevention mode, capable of representing actual home-state information in the home-state set of the above example, are extracted from the following home-state sets, respectively

Movie watching mode $\Rightarrow$ {DTV, DVD player, lighting, curtain}

Crime prevention mode $\Rightarrow$ {monitoring camera, home user, monitoring service}

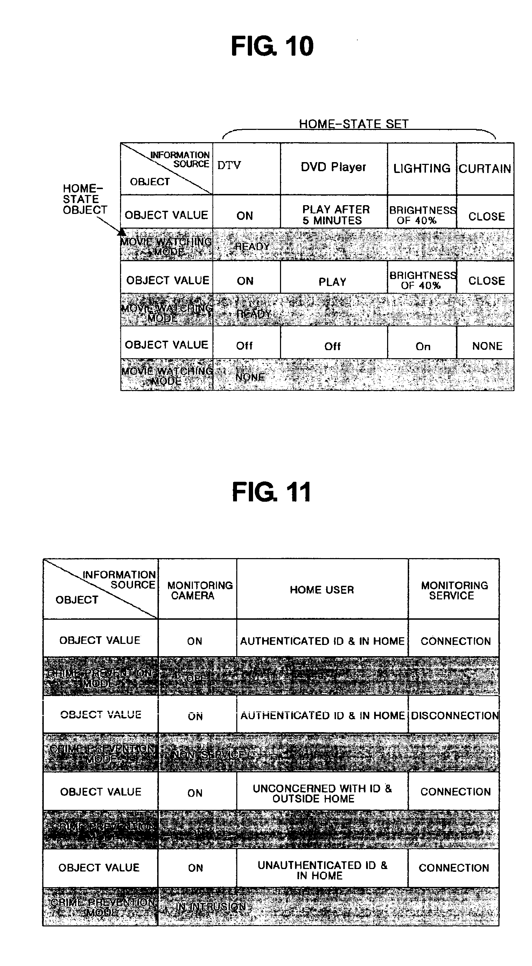

If the above sets are connected with objects, the home-states can be arranged and expressed as shown in the tables of FIGS. 10 and 11.

These tables are only examples, and more devices or services may be actually involved. It should be noted that rules for determining which home-state set must be applied to a specific home-state mode and which profiles must be used for respective information sources, are not included in the home-state information architecture itself, but can be set through various methods in such a way that the rules are personally defined by the user or provided from external home services.

Referring to FIGS. 10 and 11, ultimately, the movie watching mode and the crime prevention mode may have the following home-state information.

Movie watching mode {ready, in operation, none}

Crime prevention mode {off, non-service, in operation, in intrusion}

If the home-state set has a prescribed object value, a home-state object has home-state information corresponding to the object value. For example, information, indicating that the DTV is turned on, the DVD player is played, the lighting is set to have 40% brightness, and the curtain is closed, is obtained from the home, the home-state object of the movie watching mode has home-state information of 'in operation'.

In this way, when the home-state objects (movie watching mode and crime prevention mode) have the above home-state object values, the home-state objects have properties corresponding to the above home-state object values, which are called home-state properties.

For example, in order to set the crime prevention mode to On/Off modes, the home-state object must have properties of 'reading and writing', so that the reading and writing of the home-state information is possible to change the home-state information. Further, if the home-state object value represents 'in intrusion', the home-state object must have properties indicating that an event must be transmitted to the outside of the home. Further, if the home-state object has a user interface ID as properties, and the home-state object value represents 'in intrusion', an image in which a red warning lamp is operated is assigned to the ID to enable an external application or user to visually utilize the image. There are reading and writing, the application of an event, the range of a threshold, user interface ID and the like, as examples of the home-state properties.

In order to exchange the home-state information between external applications, the home-state information is expressed using Meta data and shared between the applications, thus enabling a corresponding application to utilize the home-state information.

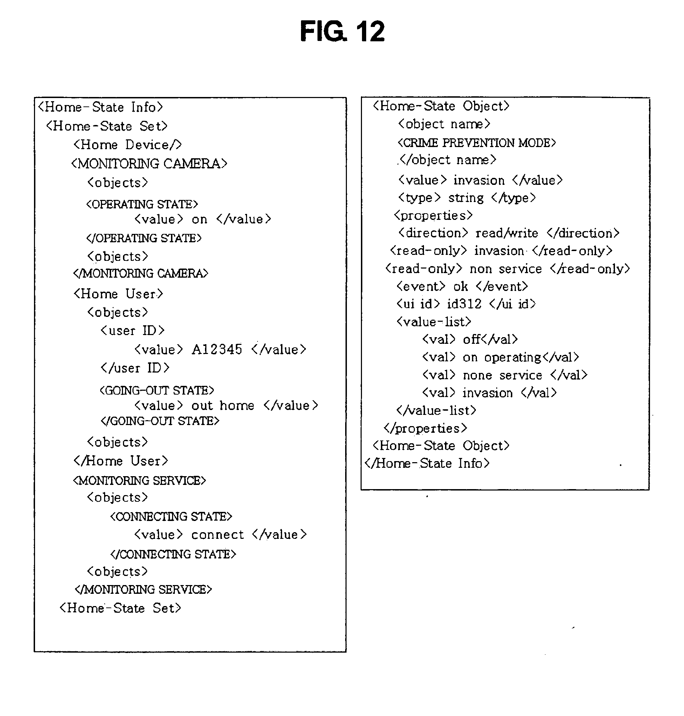

FIG. 12 is a view showing an example in which the Meta data uses extensible markup language (XML) if the home-state object value represents 'in intrusion' in the crime prevention mode.

Between the tags of <Home-state info> (at the start and end of a document), a body is divided into <Home-State Set> and <Home-State Object>. Further, between the tags of <Home-State Set>, information, indicating which values are used by certain information sources, is represented, and between the tags of <Home-State Object>, the crime prevention mode, which is a home-state object formed through the combination of the information sources, is represented. Thereafter, between the tags of <Home-State Object>, home-state properties for the value of the crime prevention mode are represented. In the tags of <properties> of the above XML document, there are arranged information as to whether 'reading and writing' of state values is possible, a list of 'read-only' values (using the tag of <read-only>), information as to whether an event is announced, user interface ID value, and a list of values that the crime prevention mode can have (using the tag of <value-list>).

While applications exchange the Meta data using XML, such home-state information can be utilized in the applications.

As described above, embodiments of the present invention provide a method and system for constructing and utilizing home-state information, which has a plurality of advantages. Certain of these advantages, are described below.

The present invention can elastically express state information of a home system related to a home network, differently from a conventional scheme using only independent state information of devices or applications.

Systems, applications and home users capable of utilizing home-state information can intuitively and completely perceive the state of a home using the home-state information. This is due to the fact that, if the home-state information is not defined or not consistent for a utilization plan, an effort to separately collect and analyze state information is required.

Embodiments of the present invention provides a method of easily utilizing home-state information, thus yielding a plurality of home services.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method of constructing home-state information in a home network, comprising the steps of:

    a) constructing a home-state set (310) using home-state information sources;
    b) constructing home-state objects (320) which are specific instances of the home-state set; and
    c) constructing home-state properties (330) expressing properties of the home-state objects.

2. The home-state information constructing method according to claim 1, wherein the home-state set comprises common profiles of the information sources.

3. The home-state information constructing method according to claim 2, wherein operation a) comprises, the step of: a1) constructing unique profiles of the respective information sources.

4. The home-state information constructing method according to claim 3, wherein operation a1) comprises, constructing home device profiles (312) and constructing external home service profiles (311) .

5. The home-state information constructing method according to any of claims 2-4, further comprising setting rules for information source objects which form profiles of the information sources and a combination thereof, the rules being applied to a specific home-state object.

6. The home-state information constructing method according to claim 5, wherein the rules are personally defined by a home user.

7. The home-state information constructing method according to claim 5, wherein the rules are provided from an external home service provider.

8. The home-state information constructing method according to any preceding claim, further comprising combining a user interface with the home-state information to show the home-state set, the home-state objects and the home-state properties to a user.

9. The home-state information constructing method according to claim 8, further comprising combining an Application Programming Interface (API) (350) with the home-state information to enable the constructed home-state information to be accessed from an external application (820, 830).

10. A home agent device (411) comprising:

    an information collecting module (611) operable to collect information from various information sources in the network;
    a home-state generating module (606) operable to process the collected information to generate the home-state information;
    a home-state analyzing module (608) operable to analyze the generated home-state information depending on home-state properties; and
    a home-state storing module (609) operable to store the information generated by the home-state generating module and information analyzed by the home-state analysing module.

11. A home agent device according to claim 10, wherein the home agent device is implemented by a separate device or mounted on a gateway, to collect information from information sources in a network and construct home-state information using the collected information.

12. The home agent device according to claim 11, further comprising an event generating module (607) operable to announce an event outside of a home depending on results analyzed by the home-state analyzing module.

13. The home agent device according to claim 11 or 12, wherein the information collecting module (611) comprises:

   a device information collecting module (601) operable to collect information of home devices;
   a user information collecting module (602) operable to collect information of home users;
   an external home service information collecting module (603) operable to collect information of an operation between the home devices and an external home service or an operation between the home users and another external home service;
   a home application information collecting module (604) operable to collect information of home applications or contents included in a home server; and
   a home agent information collecting module (605) operable to collect information of the home agent device itself.

14. A method of utilizing home-state information, comprising the steps of:

   collecting information through an information collecting module (611) in a home agent;
   processing the collected information to generate home-state information;
   analyzing the generated home-state information; and
   storing the generated home-state information.

15. The home-state information utilizing method according to claim 14, further comprising the step of announcing an event outside of a home by analyzing the home-state information.

16. A system for utilizing home-state information, comprising:

   an information collecting module (611) operable to collect information from various information sources in a network;
   a home-state generating module (606) operable to process the collected information to generate home-state information;
   a home-state analyzing module (608) operable to analyze the generated home-state information depending on home-state properties;
   a home-state storing module (609) operable to store the information generated by the home-state generating module and information analyzed by the home-state analyzing module;
   one or more applications (820, 830) operable to control a predetermined home device using the generated information or the analyzed information; and
   an Application Programming Interface (API) (350) operable to transmit the information generated by the home-state generating module and the information analyzed by the home-state analyzing module to the applications.

17. The home-state information utilizing system according to claim 16, wherein the one or more applications are constructed so that transmission or reception of home-state information therebetween is performed using Meta data for the information generated by the home-state generating module and the information analyzed by the home-state analyzing module.

# FIG. 1

# FIG. 2

# FIG. 3A

360

| APPLICATION | 350 |

330       HOME-STATE API       340

320       HOME-STATE PROPERTIES       312

311       HOME-STATE OBJECTS

| EXTERNAL HOME SERVICE PROFILES | HOME DEVICE PROFILES | HOME-STATE USER INTERFACE |

310       HOME-STATE SET

# FIG. 3B

TV

LIFE SPAN OF DEVICE

POWER CONSUMPTION PER HOUR       STATE OF POWER SWITCH

SCREEN SIZE (INCH)

ASPECT RATIO OF SCREEN

LIGHTING

LIFE SPAN OF DEVICE

POWER CONSUMPTION PER HOUR       STATE OF POWER SWITCH

COLOR OF LIGHTING

BRIGHTNESS OF LIGHTING

# FIG. 4

| 410 | 411 | 412 | 413 | 414 |
|---|---|---|---|---|
| HOME DEVICES | HOME AGENT | HOME USERS | EXTERNAL HOME SERVICES | HOME APPLICATIONS |

420

| COMBINATION | | COMBINATION | | COMBINATION | |
|---|---|---|---|---|---|
| FIRST HOME DEVICE | SECOND HOME DEVICE | FIRST HOME DEVICE | HOME USERS | FIRST HOME DEVICE | HOME AGENT |

| COMBINATION | | |
|---|---|---|
| FIRST HOME DEVICE | SECOND HOME DEVICE | HOME USERS |

• • •

430

| COMBINATION | | | |
|---|---|---|---|
| FIRST HOME DEVICE | SECOND HOME DEVICE | HOME USERS | HOME AGENT |

• • •

$$\sum_{i=1}^{n} nCi$$

# FIG. 5

APPLICATION

500

| HOME-STATE INFORMATION |—| META DATA USED TO EXCHANGE HOME-STATE INFORMATION |

13

# FIG. 6

INSIDE OF HOME | OUTSIDE OF HOME

HOME AGENT

607
EVENT GENERATING MODULE

608
HOME-STATE ANALYZING MODULE

609
HOME-STATE STORING MODULE

411

HOME-STATE GENERATING MODULE

601

601
DEVICE INFORMATION COLLECTING MODULE

602
USER INFORMATION COLLECTING MODULE

603
EXTERNAL HOME SERVICE INFORMATION COLLECTING

604
HOME APPLICATION INFORMATION COLLECTING MODULE

605
HOME AGENT INFORMATION COLLECTING MODULE

606

611

HOME DEVICES  610

HOME USERS

HOME SERVER

651

652

653

654

655

620

650

630
FIRST EXTERNAL HOME SERVICE

640
SECOND EXTERNAL HOME SERVICE

# FIG. 7

```
                    ┌──────────────────┐
                    │      Start       │
                    └──────────────────┘
                             │
                             ▼                        s710
                    ┌──────────────────┐
                    │ COLLECT INFORMATION │
          ┌────────▶│ THROUGH COLLECTING │◀────────┐
          │         │ MODULE IN HOME AGENT │         │
          │         └──────────────────┘           │
          │                  │                       │
          │                  ▼            s711        │
          │         ┌──────────────────┐            │
          │         │ PROCESS COLLECTED │            │
          │         │  INFORMATION TO   │            │
          │         │ GENERATE HOME-STATE │           │
          │         │   INFORMATION     │            │
          │         └──────────────────┘            │
          │  s712        ╱         ╲       s713       │
          │      ┌──────────────┐  ┌──────────────┐  │
          │      │ ANALYZE HOME-STATE │ │ STORE HOME-STAGE │ │
          │      │  INFORMATION   │  │  INFORMATION   │  │
          │      └──────────────┘  └──────────────┘  │
          │              │                  ▲          │
          │              ▼     s714          │          │
    No    │          ╱◇────────╲            │          │
   ┌──────┘ INFORMATION         │───────────┘          │
   │         ╲FOR EVENT?╱                              │
   │              │                                    │
   │             Yes                                   │
   │              │────────────────────────────────────┘
   │              ▼                  s715
   │      ┌──────────────┐
   │      │ ANNOUNCE EVENT │
          └──────────────┘
```

# FIG. 8

820

FIRST
APPLICATION

400

META DATA
USED TO
EXCHANGE
HOME-STATE
INFORMATION

830

SECOND
APPLICATION

840

HOME AGENT
INFORMATION API

HOME-STATE API

350

411

## HOME AGENT

HOME-STATE
STORING
MODULE

609

HOME-STATE
INFORMATION

810

# FIG. 9

HOME

HOME DEVICE
LIGHTING

HOME DEVICE
DTV

HOME DEVICE
CURTAIN

HOME DEVICE
DVD Player

HOME DEVICE
MONITORING CAMERA

HOME
GATEWAY

HOME
AGENT

MONITORING
SERVICE

HOME USER

UNAUTHENTICATED USER

16

# FIG. 10

| INFORMATION SOURCE / OBJECT | DTV | DVD Player | LIGHTING | CURTAIN |
|---|---|---|---|---|
| OBJECT VALUE | ON | PLAY AFTER 5 MINUTES | BRIGHTNESS OF 40% | CLOSE |
| MOVIE WATCHING MODE | READY | | | |
| OBJECT VALUE | ON | PLAY | BRIGHTNESS OF 40% | CLOSE |
| MOVIE WATCHING MODE | READY | | | |
| OBJECT VALUE | Off | Off | On | NONE |
| MOVIE WATCHING MODE | NONE | | | |

HOME-STATE SET

HOME-STATE OBJECT

# FIG. 11

| INFORMATION SOURCE / OBJECT | MONITORING CAMERA | HOME USER | MONITORING SERVICE |
|---|---|---|---|
| OBJECT VALUE | ON | AUTHENTICATED ID & IN HOME | CONNECTION |
| CRIME PREVENTION MODE | OFF | | |
| OBJECT VALUE | ON | AUTHENTICATED ID & IN HOME | DISCONNECTION |
| CRIME PREVENTION MODE | NON SERVICE | | |
| OBJECT VALUE | ON | UNCONCERNED WITH ID & OUTSIDE HOME | CONNECTION |
| CRIME PREVENTION MODE | ON | | |
| OBJECT VALUE | ON | UNAUTHENTICATED ID & IN HOME | CONNECTION |
| CRIME PREVENTION MODE | IN INTRUSION | | |

# FIG. 12

```
<Home-State Info>
 <Home-State Set>
    <Home Device/>
    <MONITORING CAMERA>
      <objects>
      <OPERATING STATE>
            <value> on </value>
      </OPERATING STATE>
      <objects>
    </MONITORING CAMERA>
    <Home User>
      <objects>
        <user ID>
            <value> A12345 </value>
        </user ID>
        <GOING-OUT STATE>
            <value> out home </value>
        </GOING-OUT STATE>
      <objects>
    </Home User>
    <MONITORING SERVICE>
      <objects>
        <CONNECTING STATE>
            <value> connect </value>
        </CONNECTING STATE>
      <objects>
    </MONITORING SERVICE>
  <Home-State Set>
```

```
<Home-State Object>
    <object name>
    <CRIME PREVENTION MODE>
    </object name>
    <value> invasion </value>
    <type> string </type>
    <properties>
    <direction> read/write </direction>
   <read-only> invasion </read-only>
   <read-only> non service </read-only>
    <event> ok </event>
    <ui id> id312 </ui id>
    <value-list>
        <val> off</val>
        <val> on operating</val>
        <val> none service </val>
        <val> invasion </val>
    </value-list>
  </properties>
 <Home-State Object>
</Home-State Info>
```